# EUROPEAN PATENT SPECIFICATION

(11) **EP 1 522 075 B1**
(45) Date of publication and mention of the grant of the patent: **24.05.2006**
(21) Application number: 03732968.7
(22) Date of filing: 24.06.2003
(51) Int. Cl.: G11B 23/03, G11B 33/04, G11B 33/14

(54) **DISC COMPRISING A SUBSTRATE HAVING A SUPPORT PLATE AND A REGISTRATION LAYER CONNECTED TO THE SUPPORT PLATE**
SCHEIBE UMFASSEND EIN SUBSTRAT MIT EINER STÜTZPLATTE UND EINER AUFZEICHNUNGSLAGE VERBUNDEN MIT DER STÜTZPLATTE
DISQUE COMPRENANT UN SUBSTRAT MUNI D'UNE PLAQUE DE SUPPORT ET D'UNE COUCHE D'ENREGISTREMENT RELIEE A LA PLAQUE DE SUPPORT

(30) Priority: 08.07.2002 EP 02077730
(43) Date of publication of application: 13.04.2005
(73) Proprietor: Koninklijke Philips Electronics N.V., 5621 BA Eindhoven (NL)
(72) Inventor: VAN DER AA, Michael, A., H., NL-5656 AA Einhoven (NL); NIJSSE, Gerard, J., P., NL-5656 AA Eindhoven (NL); JANSEN, Gerardus, L., M., NL-5656 AA Eindhoven (NL)
(74) Representative: van der Veer, Johannis Leendert
(86) International application number: PCT/IB2003/002706
(87) International publication number: WO 2004/006258

(56) References cited:
- EP-A- 0 840 308
- DE-A- 2 644 894
- GB-A- 2 037 475
- US-A- 4 185 313

## Description

The invention relates to a disc comprising a protective plate and a substrate layer that comprises a support plate and a registration layer connected to the support plate, wherein the protective plate is located at the side of the registration layer remote from the support plate, which protective plate can be detachably fastened to the substrate layer.

Such a disc known from European patent application EP-0,840,308 comprises a support plate, a registration layer connected to the support plate and a protective plate. The protective plate is detachably fastened by vacuum on the registration layer such that the registration layer is protected against the ambient atmosphere.

In this known disc, however, the registration layer is not well protected against mechanical loads which occur, for example, in the case of impacts.

An object of the invention is to provide a disc which protects the registration layer better so as to prevent damage to the registration layer.

This object is achieved in the disc according to the invention in that the protective plate can be magnetically fastened to the substrate layer.

The advantage of a protective plate that can be detachably fastened is that the registration layer is protected by the protective plate situated on the substrate layer when the disc need not be written or read. Prior to reading or writing of the registration layer, the detachably fastened protective plate is to be removed, such that the registration layer becomes accessible. It is an advantage that the substrate layer and the protective plate are fastened to another in a simple and secure manner by means of at least one magnet. In addition a magnet may be provided both in the protective plate and in the substrate layer, in which case the protective plate or the substrate layer may have a planer disc shape.

A disc known from Dutch patent application NL-8300478 comprises a support plate, a registration layer lying on the support plate, and a covering layer located at a distance from the registration layer. The covering layer in the known optical disc has the purpose of providing a gas tight space in combination with the registration carrier, such that the registration carrier is protected against the ambient atmosphere.

GB-2,037,475 discloses a cartridge having a circular top cover to which a removable bottom cover is secured by magnets. A magnetic disc is disposed between a housing formed by the top cover and a protective cover secured to a lower edge of a skirt of the top cover. The disc is of a conventional construction.

An embodiment of the disc according to the invention is characterized in that the support plate has the shape of a disc and is provided with at least one raised edge extending upwards from a circumferential edge, by means of which the protective plate can be detachably fastened.

An advantage of such an embodiment is that the edge protects a lateral side of the disc against external influence. In addition, the raised as satisfactorily absorbs forces which are exerted on the plate, for example in the case of an impact or drop.

Another embodiment of the disc according to the invention is characterized in that the substrate layer can be inserted into a protective element which comprises at least the protective plate.

An advantage of such an embodiment is that, when the substrate layer is present inside the protective element, said protective element protects the entire substrate layer against external influences.

Yet another embodiment of the disc according to the invention is characterized in that at least an outer circumferential edge of the substrate layer or of the protective plate is provided with a groove.

An advantage of such an embodiment is that the groove can act as a point of application for a rail or a similar element whereby the substrate layer or the protective plate can be gripped, such that the substrate layer and the protective plate can be separated from one another in a simple manner.

The invention will be explained in more detail with reference to the accompanying drawings, in which:
Fig. 1 is a diagrammatic cross-sectional view of a first embodiment of a disc according to the invention,
Fig. 2 is a diagrammatic cross-sectional view of a second embodiment of a disc according to the invention,
Fig. 3 is a perspective lateral view of a third embodiment of a disc according to the invention,
Fig. 4a is a diagrammatic plan view of an embodiment of a protective plate, and
Fig. 4b is a diagrammatic cross-sectional view of an embodiment of a substrate layer on which the plate of Fig. 4a can be fastened.

Corresponding components have been given the same reference numerals in the Figures.

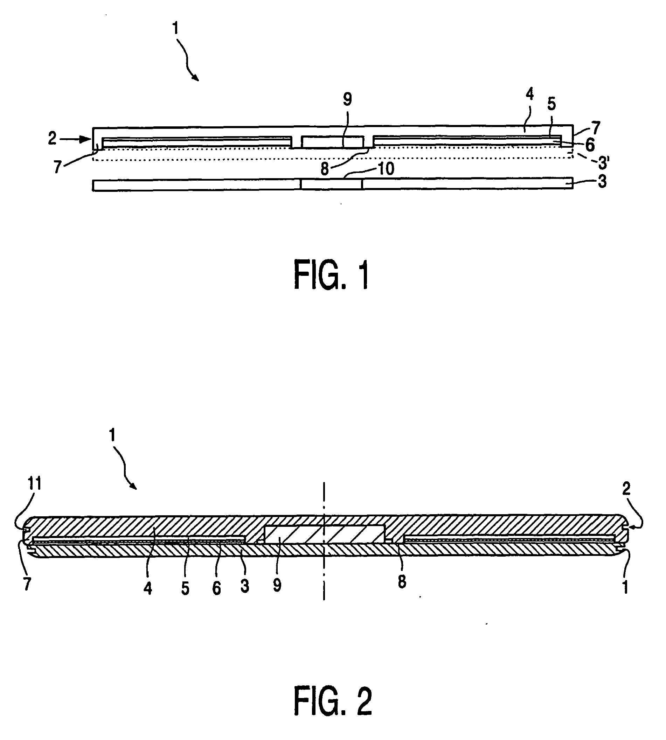

Fig. 1 is a diagrammatic cross-sectional view of a first embodiment of an optical disc 1 according to the invention. The optical disc 1 comprises a substrate layer 2 and a protective plate 3 that can be detachably coupled thereto. The circular substrate layer 2 comprises a support plate 4, a registration layer 5 connected thereto, and a covering layer 6 connected to the registration layer 5 at a side of the registration layer 5 remote from the support plate 4. The support plate 4 is provided with a raised edge 7 on the outer circumferential edge and with a raised edge 8 located adjacent the centerline of the support plate 4. The registration layer 5 and the covering layer 6 provided thereon are situated between the raised edges 7 and 8 of the support plate 4. The covering layer 6 connected to the registration layer 5 ensures that a medium with which the disc 1 is read or written, such as a laser (not shown), is not hampered by any dust particles. Without the covering layer 6, the dust particles would be present immediately on the registration layer 5, which would render the registration layer 5 badly readable/writable. The covering layer 6, which is thin compared with the support plate 4, is manufactured from a material transparent to a reading or writing medium. The support plate 4 is manufactured from a hard material, for example metal or synthetic resin. The registration layer 5 is manufactured from materials for optical registration which are known per se. A magnet 9 surrounded by the central raised edges 8 is situated in the center of the support plate 4.

A protective plate 3, which can be detachably connected to the substrate layer 2, is located opposite the substrate layer 2 at the side remote from the support plate 4. A magnet 10 is arranged in the central portion of the protective plate 3.

The function of the protective plate 3 will now be briefly explained. To protect the registration layer 5, the protective plate is moved from the side of the covering layer 6, i.e. from the position shown in continuous lines, into the position shown with dotted lines denoting the protective plate 3', where the protective plate 3' is detachably fastened to the support plate 4 by means of the magnets 9, 10. The protective plate 3 is positioned as well as retained on the substrate layer 2 by means of the magnets 9, 10.

The protective plate 3' bears on the raised edges 7, 8 of the support plate 4, which edges together absorb external forces exerted on the optical disc 1. In addition, the raised edges 7 of the support plate 4 provide a lateral protection of the registration layer 5. The registration layer 5 is effectively protected against external physical influences by the protective plate 3 and the raised edges 7.

When the optical disc 1 is to be written or read, the protective plate 3 is to be removed from the substrate layer 2, for example by means of a gripper device or the like.

Fig. 2 is a diagrammatic cross-sectional view of a second embodiment of an optical disc 1 according to the invention. The protective plate 3 and the substrate layer 2 differ from the first embodiment in that grooves 11 are located in the circumferential edges, so that external means, for example rails to be inserted into the grooves, are capable of separating the protective plate 3 and the substrate layer 2 from one another. In addition, the metal protective plate 3 does not comprise a magnet, but is drawn against the support plate 4 by the magnet 9 located in the support plate 4.

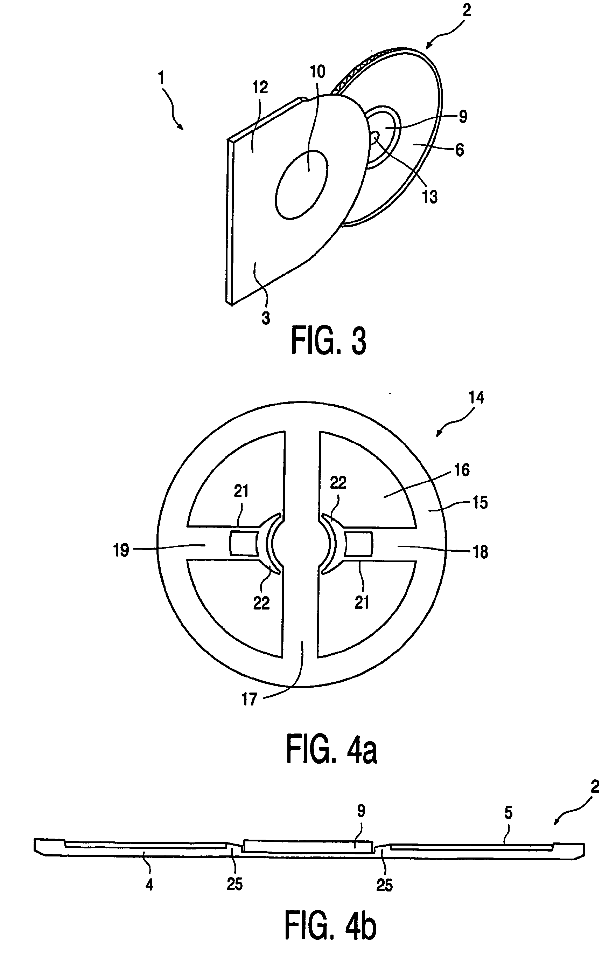

Fig. 3 is a perspective lateral view of a third embodiment of an optical disc 1 according to the invention. The optical disc 1 in this embodiment comprises a sleeve-type protective element 12 and a substrate layer 2. The substrate layer 2 has the same construction as in one of the preceding Figures. The sleeve-type protective element 12 comprises the protective plate 3 and the magnet 10. The substrate layer 2 is passed into the sleeve-type protective element 12 for protection purposes. The substrate layer 2 is substantially entirely enclosed and protected by the protective element 12.

The advantage of a comparatively sturdy protective element 12 is that the support plate 4 need not be manufactured from a hard material, because the protective element 12 encloses the substrate layer 2 in its entirety and absorbs external forces originating from all directions.

The optical disc 1 is provided with an opening 13 in the center of the substrate layer 2, by means of which the substrate layer 2 can be positioned on a turntable (not shown) on which the registration layer 5 can be written and read.

Fig. 4a is a diagrammatic plan view of an embodiment of a protective plate 14 according to the invention. The protective plate 14 comprises a metal ring 15 and a transparent, disc-shaped part 16 situated thereon. The ring 15 comprises a first strip 17 which extends diametrically across the ring 15. The ring is further provided with a second and a third strip 18, 19 which extend from the ring 15 transversely to the strip 17 towards the center of the ring 15. The second and the third strip 18, 19 are each provided adjacent the center with two parallel resilient bridges 21 extending towards the first strip 17, which bridges are connected to crescent-shaped ends 22 of the strips 18, 19 at a side facing away from the ring 15. The strips 17, 18, 19 are manufactured from soft magnetic material.

Fig. 4b is a diagrammatic cross-sectional view of an embodiment of a substrate layer 2. The substrate layer 2 comprises the same components as the substrate layers 2 of the embodiments shown in Figs. 1 and 2, with the proviso that the embodiment shown in Fig. 4 is provided with a raised edge 25 located adjacent the centerline, the end of said raised edge sloping downwards towards the magnet at a small angle. The support plate 4 is manufactured from a soft magnetic material in this embodiment.

When the protective plate 14 shown in Fig. 4a is positioned on the substrate layer 2 shown in Fig. 4b, the strip 17 of soft magnetic material of the protective plate 14 is attracted towards the substrate layer 2 by the magnet 9. The crescent-shaped ends 22 of the strips 18, 19 are drawn against the sloping inner raised edge 25 of the substrate layer 2 counter to the spring force of the bridges 21. The protective plate 14 is placed in the correct position with respect to the substrate 2 by means of the crescent-shaped ends 22 enclosing the round magnet 9, whereby a mutual displacement is effectively prevented. The force of attraction between the magnet 9 and the magnetic material of the strip 17 retains the protective plate 14 against the substrate layer 2.

The optical discs according to the invention may have the dimensions of a coin, while having a data capacity of approximately 1 gigabyte. This ratio of dimension to capacity renders the optical discs suitable for use in comparatively small appliances with memory-dependent applications such as, for example, mobile telephones.

It is alternatively possible, however, that mechanical means such as, for example, a closing tag or the like, are used for retaining the substrate layer 2 in the protective element 12 shown in Fig. 3.

It is furthermore possible that the disc is not provided with an opening 13, but that instead the disc can be positioned and handled by its outer circumferential edge.

It is alternatively possible to use a magneto-optical disc, a magnetic disc, or the like instead of an optical disc.

It is also possible that the disc 1 is not provided with a covering layer 6, for example in the case of a magnetic disc.

It is furthermore possible to use a single magnet instead of the magnets 9, 10, and to manufacture the part to be fastened thereby from a soft magnetic material.

It is also possible to provide the protective element 12 with two protective plates 3, each provided with a magnet 10.

## Claims

1. A disc (1) comprising a protective plate (3; 14) and a substrate layer (2) that comprises a support plate (4) and a registration layer (5) connected to the support plate (4), wherein the protective plate (3; 14) is located at the side of the registration layer (5) remote from the support plate (4), which protective plate (3; 14) can be detachably fastened to the substrate layer (2), **characterized in that** the protective plate (3; 14) can be magnetically fastened to the substrate layer (2).

2. A disc as (1) claimed in claim 1, **characterized in that** the support plate (4) has the shape of a disc (1) and is provided with at least one raised edge (7) extending upwards from a circumferential edge, by means of which the protective plate (3; 14) can be detachably fastened.

3. A disc (1) as claimed in any one of the preceding claims, **characterized in that** the substrate layer (2) can be inserted into a protective element (12) which comprises at least the protective plate (3).

4. A disc (1) as claimed in any one of the preceding claims, **characterized in that** at least an outer circumferential edge of the a substrate layer (2) or of the protective plate (3; 14) is provided with a groove (11).

5. A disc (1) as claimed in any one of the preceding claims, **characterized in that** the registration layer (5) is provided with a covering layer (6) at a side facing away from the support plate (4).

6. A disc (1) as claimed in any one of the preceding claims, **characterized in that** a magnet (9; 10) is situated in the center of the support plate (4) and/or in the central portion of the protective plate (3; 14).

7. A disc (1) as claimed in any one of the preceding claims 1, 2, 4, 5 or 6, **characterized in that** the protective plate (14) comprises a metal ring (15) and a transparent, disc-shaped part (16) situated thereon, wherein the ring (15) comprises a first strip (17) of soft magnetic material which extends diametrically across the ring (15).

8. A disc as (1) claimed in claim 7, **characterized in that** The ring is further provided with a second (18) and a third strip (19) of soft magnetic material which extend from the ring (15) transversely to the strip (17) towards the center of the ring, wherein the second (18) and the third strip (19) are each provided adjacent the center with two parallel resilient bridges (21) extending towards the first strip (17), which bridges (21) are connected to crescent-shaped ends (22) of the strips (18, 19) at a side facing away from the ring (15).

9. A disc (1) as claimed in any one of the preceding claims, wherein the disc is an optical disc.

10. A disc (1) as claimed in any one of the claims 1 to 8, wherein the disc has the dimensions of a coin.

## Patentansprüche

1. Scheibe (1) mit einer Schutzplatte (3; 14) und einer Substratschicht (2), die eine Trägerplatte (4) und eine Aufzeichnungsschicht (5) aufweist, die mit der Trägerplatte (4) verbunden ist, wobei die Schutzplatte (3; 14) an der Seite der Aufzeichnungsschicht (5) liegt, die der Trägerplatte (4) abgewandt ist, wobei diese Schutzplatte (3; 14) entfernbar an der Trägerschicht (2) befestigt werden kann, **dadurch gekennzeichnet, dass** die Schutzplatte (3; 14) magnetisch an der Substratschicht (2) befestigt werden kann.

2. Scheibe (1) nach Anspruch 1, **dadurch gekennzeichnet, dass** die Trägerplatte (4) die Form einer Scheibe (1) hat und mit wenigstens einem stehenden Rand (7) versehen ist, der sich von einem Umfangsrand aufwärts erstreckt, wobei mit Hilfe davon die Schutzplatte (3; 14) entfernbar befestigt werden kann.

3. Scheibe (1) nach einem der vorstehenden Ansprüche, **dadurch gekennzeichnet, dass** die Substratschicht (2) in ein Schutzelement (12) eingeschoben werden kann, das wenigstens die Schutzplatte (3) aufweist.

4. Scheibe (1) nach einem der vorstehenden Ansprüche, **dadurch gekennzeichnet, dass** wenigstens ein Außenumfangsrand der Trägerschicht (2) oder der Schutzplatte (3; 14) mit einer Rille (11) versehen ist.

5. Scheibe (1) nach einem der vorstehenden Ansprüche, **dadurch gekennzeichnet, dass** die Aufzeichnungsschicht (5) an der Seite, die von der Trägerplatte abgewandt ist, mit einer Deckschicht (6) versehen ist.

6. Scheibe (1) nach einem der vorstehenden Ansprüche, **dadurch gekennzeichnet, dass** ein Magnet (9; 10) sich in der Mitte der Trägerplatte (4) und/oder in dem zentralen Teil der Schutzplatte (3; 14) befindet.

7. Scheibe nach einem der vorstehenden Ansprüche 1, 2, 3, 4, 5 oder 6, **dadurch gekennzeichnet, dass** die Schutzplatte (14) einen Metallring (15) und einen daran befestigten transparenten scheibenförmigen Teil (16) aufweist, wobei der Ring (15) einen ersten Streifen (17) aus weichmagnetischem Material aufweist, der sich diametral über den Ring (15) erstreckt.

8. Scheibe (1) nach Anspruch 7, **dadurch gekennzeichnet, dass** der Ring weiterhin mit einem zweiten (18) und einem dritten Streifen (19) aus weichmagnetischem Material versehen ist, die sich von dem Ring (15) quer zu dem Streifen (17) in Richtung der Mitte des Ringes erstrecken, wobei der zweite (18) und der dritte Streifen (19) je neben der Mitte mit zwei parallelen federnden Brücken (21) versehen sind, die sich in Richtung des ersten Streifens (17) erstrecken, wobei diese Brücken (21) mit sichelförmigen Enden (22) der Streifen (18, 19) an der von dem Ring (15) abgewandten Seite verbunden sind.

9. Scheibe (1) nach einem der vorstehenden Ansprüche, wobei die Scheibe eine optische Scheibe ist.

10. Scheibe (1) nach einem der Ansprüche 1 bis 8, wobei die Scheibe die Größe einer Münze hat.

## Revendications

1. Disque 1 comprenant une plaque de protection (3 ; 14) et une couche de substrat (2) qui comprend une plaque de support (4) et une couche d'enregistrement (5) connectée à la plaque de support (4), dans lequel la plaque de protection (3 ;14) est située du côté de la couche d'enregistrement (5) éloigné de la plaque de support (4), laquelle plaque de protection (3 ; 14) peut être fixée de façon détachable à la plaque de substrat (2), **caractérisé en ce que** la plaque de protection (3 ; 14) peut être fixée de façon magnétique à la couche de substrat (2).

2. Disque (1) selon la revendication 1, **caractérisé en ce que** la plaque de support (4) est sous forme d'un disque (1) et est muni d'au moins un bord relevé (7) s'étendant vers le haut à partir d'un bord circonférentiel, bord à l'aide duquel la plaque de protection (3 ; 14) peut être fixée de façon détachable.

3. Disque (1) selon l'une des revendications précédentes, **caractérisé en ce que** la couche de substrat (2) peut être introduite dans un élément de protection (12) qui comprend au moins la plaque de protection (3).

4. Disque (1) selon l'une des revendications précédentes, **caractérisé en ce qu'**au moins un bord circonférentiel extérieur de la couche de substrat (2) ou de la plaque de protection (3 ; 14) est muni d'une rainure (11).

5. Disque (1) selon l'une des revendications précédentes, **caractérisé en ce que** la couche d'enregistrement (5) est munie d'une couche de recouvrement (6) d'un côté s'écartant de la plaque de support (4).

6. Disque (1) selon l'une des revendications précédentes, **caractérisé en ce qu'**un aimant (9 ; 10) est situé au centre de la plaque de support (4) et/ou dans la partie centrale de la plaque de protection (3 ; 14).

7. Disque (1) selon l'une des revendications précédentes 1, 2, 4, 5 ou 6, **caractérisé en ce que** la plaque de protection (14) comprend un anneau métallique (15) et une partie en forme de disque transparente (16) située sur ce dernier, dans lequel l'anneau (15) comprend une première bande (17) en un matériau magnétique doux qui s'étend de façon diamétrale par rapport à l'anneau (15).

8. Disque comme 1 selon la revendication 7, **caractérisé en ce que** l'anneau est muni en outre d'une deuxième (18) et d'une troisième bande (19) en un matériau magnétique doux qui s'étend à partir de l'anneau (15) de façon transversale par rapport à la bande (17) vers le centre de l'anneau, dans lequel la deuxième (18) et la troisième bande (19) sont appliquées chacune près du centre avec deux ponts élastiques parallèles (21) s'étendant vers la première bande (17), lesquels ponts (21) sont connectés à des extrémités en forme de croissant (22) des bandes (18, 19) d'un côté s'étendant à partir de l'anneau (15).

9. Disque 1 selon l'une des revendications précédentes, dans lequel le disque est un disque optique.

10. Disque 1 selon l'une des revendications 1 à 8, dans lequel le disque présente les dimensions d'une pièce de monnaie.
